# EUROPÄISCHE PATENTANMELDUNG

(11) **EP 0 883 229 A1**
(43) Veröffentlichungstag der Anmeldung: **09.12.1998**
(21) Anmeldenummer: 98106943.8
(22) Anmeldetag: 16.04.1998
(51) Int. Cl.: H02K 11/04, B60K 7/00, B61C 9/46

(54) **Stromrichtergespeister Antriebssystem**

(30) Priorität: 06.06.1997 DE 19723781
(71) Anmelder: ABB Daimler-Benz Transportation (Technology) GmbH, 13627 Berlin (DE)
(72) Erfinder: Krämer, Wilhelm, Dipl.-Ing., 69207 Sandhausen (DE)
(74) Vertreter: Luderschmidt, Schüler & Partner GbR

(57) **Zusammenfassung**

Es wird ein stromrichtergespeistes Antriebssystem mit mindestens einem Antriebsmotor vorgeschlagen, welcher über ein Stromrichtergerät gespeist wird. Eine Ventilbaugruppe (3, 4) mit Halbleiterbauelementen, ein Kühler (5, 6) zur Kühlung der Halbleiterbauelemente und eine Kondensatorbaugruppe (7, 8) sind direkt am Antriebsmotor (1, 2, 31) montiert, während eine Drosselbaugruppe (11) hiermit zwar elektrisch verbunden, jedoch hiervon räumlich getrennt installiert ist. Der Kühler (5, 6) wird gleichzeitig auch zur Kühlung des Antriebsmotors herangezogen.

## Beschreibung

Die Erfindung bezieht sich auf ein stromrichtergespeistes Antriebssystem gemäß dem Oberbegriff des Anspruchs 1. Die Erfindung kann beispielsweise bei Straßenbahnen verwendet werden.

Aus ABB Technik 4/1994, S. 26 bis 32 ist ein stromrichtergespeistes Antriebssystem für Stadtbahnen bekannt, bei dem Triebfahrwerke mit Einzelradantrieb verwendet werden, wobei die Energiespeisung der Fahrmotoren über auf dem Dach der Fahrzeuge installierte Transistorwechselrichter erfolgt. Dies erfordert eine relativ aufwendige Verkabelung zwischen der Energieeinspeiung und den Antriebsmotoren.

Der Erfindung liegt die Aufgabe zugrunde, ein stromrichtergespeistes Antriebssystem der eingangs genannten Art anzugeben, mit dem eine Reduzierung der Kosten und des Gewichts erzielt wird.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß durch das vorgeschlagene stromrichtergespeiste Antriebssystem eine Baugruppen- und Geräteverdichtung auf ca. 1/3 der bisherigen Gewichte und Volumen erzielt wird, wodurch sich Gewichts- Volumen- und Kostenreduzierungen ergeben. Beispielsweise ergibt sich ein reduzierter Aufwand hinsichtlich der Verkabelung und der Kühlung der Baukomponenten. Für die Kühlung der Halbleiterventile und der Antriebsmotoren dient ein- und dasselbe Kühlsystem. Die Erfindung ist sowohl bei Einzelantrieben (beispielsweise bei Radnabenmotoren) als auch bei Drehgestell-Antrieben einsetzbar. Die Anwendungsgebiete beschränken sich jedoch nicht auf die Fahrzeugtechnik, wie beispielsweise Schienenverkehr, Busse, Lastkraftwagen, sondern betreffen die gesamte Antriebstechnik, beispielsweise auch industrielle Antriebe.

Die Erfindung wird nachstehend anhand der in der Zeichnung dargestellten Ausführungsbeispiele erläutert. Es zeigen:
- Fig. 1: ein stromrichtergespeistes Antriebssystem mit zwei Antriebsmotoren,
- Fig. 2: ein Antriebssystem mit Einzelrad und Radnabenmotor.

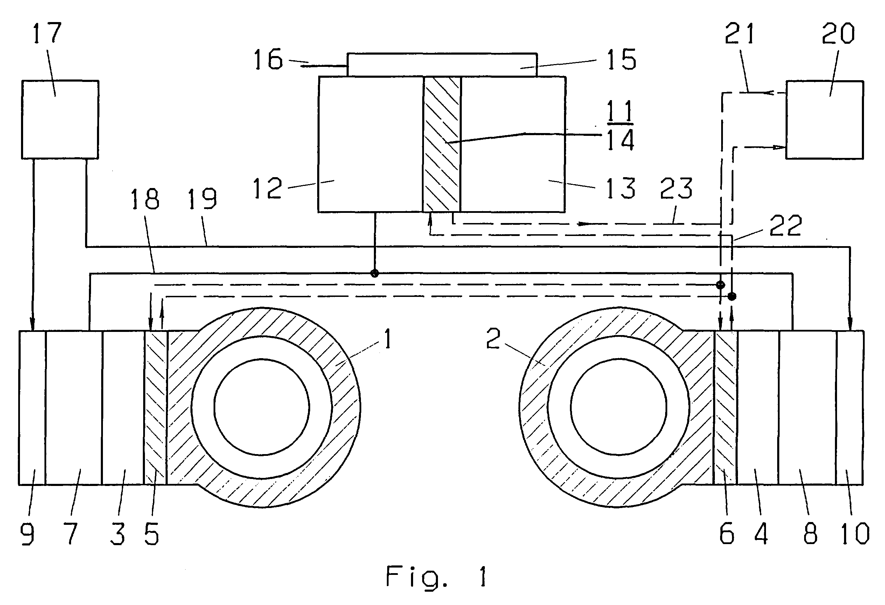

In Fig. 1 ist ein stromrichtergespeistes Antriebssystem mit zwei Antriebsmotoren (Einzelradantriebe) dargestellt. Wesentliches Kennzeichen der Konfiguration ist, daß jeder der Antriebsmotoren 1 bzw. 2 unmittelbar mit einem eigenen Stromrichtergerät verbunden ist, beispielsweise ist das Stromrichtergerät im Motorklemmkasten montiert. Jedes Stromrichtergerät besteht aus einer Ventilbaugruppe 3 bzw. 4 mit den Halbleiterventilen, einem Kühler 5 bzw. 6 und einer Kondensatorbaugruppe 7 bzw. 8 (insbesondere Filterkondensatoren). In die Kondensatorbaugruppen oder die Ventilbaugruppen sind die Treiberschaltungen 9 bzw. 10 für die Leistungsversorgung der Halbleiterventile integriert.

Die aus den Komponenten 3, 5, 7, 9 bzw. 4, 6, 8, 10 bestehenden Stromrichtergeräte sind zweckmäßig mittels eines Gehäuses hermetisch gekapselt. Die elektrischen Anschlüsse erfolgen über abgedichtete Steckkontakte. Aus diese Weise ist ein Feuchtigkeits- und Staubschutz der Stromrichtergeräte gewährleistet.

Die Kühler 5, 6 sind integrale Bestandteile der Ventilbaugruppen 3, 4 und dienen primär der Kühlung der Halbleiterventile. Gleichzeitig ermöglichen sie jedoch ohne wesentlich größeren Mehraufwand zusätzlich die Kühlung der Antriebsmotoren 1, 2. Um die Wärmeabfuhr aus den Antriebsmotoren zuverlässig sicherzustellen, ist gemäß einer ersten Variante eine thermische Druckkontaktierung zwischen Antriebsmotoren und Kühlern vorgesehen, d. h. jede Baukomponente Ventilbaugruppe/Kühler ist mit einem Befestigungsflansch versehen, welcher eine Verschraubung mit dem Mantel des Antriebsmotors über Schraubbolzen und Tellerfedern ermöglicht, wobei die Tellerfedern den für die Druckkontaktierung erforderlichen Druck einstellen.

Gemäß einer zweiten Variante weisen die Antriebsmotoren selbst Kühlsysteme auf, welche beispielsweise im Zylindermantel des Ständers integriert sind. Über Kühlmittel-Verbinder wird das Kühlmittel vom Kühler 5, 6 zum Kühlsystem des Motors geleitet. Zweckmäßig durchläuft das rückgekühlte Kühlmittel zunächst vollständig den Kühler der Ventilbaugruppe und gelangt erst danach zum Kühler des Motors, um die temperaturempfindlichen Halbleiter zu schonen. Diese zweite Variante eignet sich insbesondere bei der Verwendung eines flüssigen Kühlmittels.

Die Kondensatorbaugruppen oder Ventilbaugruppen weisen zweckmäßig integrierte Meßwandler auf, welche für die Steuerung und Regelung des Antriebssystems von Wichtigkeit sind (beispielsweise Meßwandler zur Strom- und Spannungserfassung).

Um das Gewicht der ungefederten Antriebskomponenten bei Einsatz des stromrichtergespeisten Antriebssystems in Fahrzeugen minimal zu halten, sind die erforderlichen, relativ gewichtsintensiven induktiven Baukomponenten nicht unmittelbar mechanisch mit dem Antriebsmotor verbunden, sondern räumlich hiervon getrennt an einer gefederten Baukomponente des Fahrzeuges montiert.

Vorzugsweise ist eine gemeinsame Drosselbaugruppe 11 (insbesondere mit Filterdrosseln) für beide Stromrichter vorgesehen. Diese Drosselbaugruppe weist entweder eine einzige Zentraldrossel oder - wie im Ausführungsbeispiel dargestellt - zwei separate Drosseln 12, 13 auf, welche mit einem Kühler 14 kontaktiert sind. Über elektrische Verbindungen 18 erfolgt die notwendige elektrische Anbindung der Drosselbaugruppe 11 an die Stromrichtergeräte.

Besonders zweckmäßig ist es, wenn in die Drosselbaugruppe 11 ein Eingangskreis 15 mit elektrischem Anschluß, Sicherung und Schaltelement inklusive Antrieb integriert ist. Diese besonders vorteilhafte Ausgestaltung erspart ein sonst übliches separates Klemmbrett, da die elektrische Einspeisung 16 direkt am Eingangskreis 15 erfolgen kann.

Zur übergeordneten Ansteuerung der Stromrichtergeräte ist ein zentrales Antriebssteuer- und Regelgerät 17 vorgesehen, welches über elektrische Verbindungen 19 mit den Stromrichtergeräten verbunden ist. Über diese elektrischen Verbindungen 19 empfängt das Antriebssteuer- und Regelgerät 17 Meßsignale der Meßwandler und versorgt die Treiberschaltungen 9, 10 mit den zur Einstellung der momentan gewünschten Antriebsleistung und des Antriebsdrehmomentes notwendigen Ansteuersignalen.

Die Kühlung der Baukomponenten (Kühler 5, 6, 14) kann wahlweise als Luft- oder als Flüssigkeitskühlung ausgebildet werden. Im Ausführungsbeispiel ist eine Flüssigkeitskühlung - vorzugsweise Brauchwasserkühlung - skizziert, bestehend aus den Kühlern 5, 6, 14, einem externen Rückkühler 20 (inklusive Pumpe) und den zugehörigen, gestrichelt dargestellten hydraulischen Verbindungsleitungen zwischen diesen Komponenten. Ein Kühlmittel-Vorlauf 21 erstreckt sich vom Rückkühler 20 zu den Kühlern 5, 6, ein Kühlmittel-Rücklauf 22 erstreckt sich von diesen Kühlern 5, 6 zum weiteren Kühler 14 und ein weiterer Kühlmittel-Rücklauf 23 erstreckt sich vom Kühler 14 zum Rückkühler 20. Durch diese Kühlmittelführung ist gewährleistet, daß die wärmeempfindlichen Halbleiterventile der Stromrichtergeräte bevorzugt mit der relativ kalten, rückgekühlten Kühlflüssigkeit beaufschlagt werden.

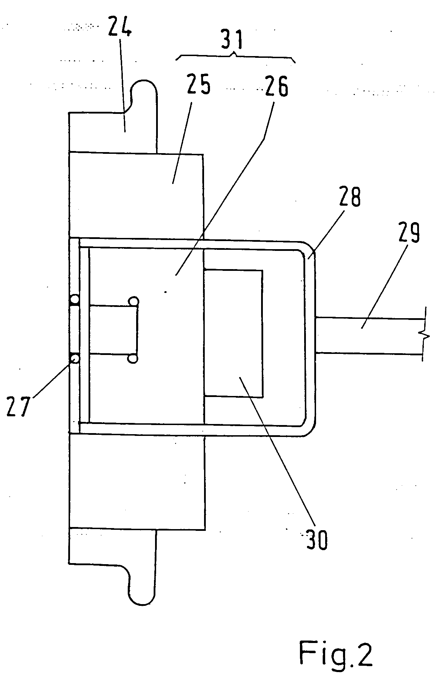

In Fig. 2 ist als weiteres Ausführungsbeispiel ein Antriebssystem mit Einzelrad und Radnabenmotor dargestellt. Der Antriebsmotor 31 (Radnabenmotor) besteht aus einem außenliegenden Läufer 25 und einem innenliegenden Ständer 26, wobei diese beiden Motorkomponenten über ein Lager 27 drehbar miteinander verbunden sind. Der Läufer 25 ist fest mit einem Rad 24 verbunden, während der Ständer 25 fest an einer Felgenschüssel 28 montiert ist. Die Felgenschüssel 28 wiederum ist starr mit einer feststehenden Achse 29 verbunden, welche am Fahrzeug montiert ist.

Ein aus den Baukomponenten Ventilbaugruppe mit Halbleiterbauelementen, Kühler zur Kühlung der Halbleiterbauelemente, Kondensatorbaugruppe und Treiberschaltung bestehendes Stromrichtergerät 30 ist innerhalb der Felgenschüssel 28 angeordnet und direkt mit dem Ständer 26 verbunden. Der zur Kühlung der Halbleiterbauelemente dienende Kühler wird gleichzeitig auch zur Kühlung des Antriebsmotors herangezogen (mittels Druckkontaktierung oder Kühlmittel-Verbinder).

Die Drosselbaugruppe sowie das Antriebssteuer- und Regelgerät befinden sich außerhalb von der Antriebseinheit, wie auch beim Ausführungsbeispiel gemäß Fig. 1 beschrieben. Die Leistungseinspeisung (Eingangskreis mit elektrischer Einspeisung) und die Ansteuerung (Antriebssteuer- und Regelgerät) erfolgen ebenfalls gemäß der unter Fig. 1 erläuterten vorteilhaften Weise.

## Patentansprüche

1. Stromrichtergespeistes Antriebssystem mit mindestens einem Antriebsmotor, welcher über ein Stromrichtergerät gespeist wird, dadurch gekennzeichnet, daß eine Ventilbaugruppe (3, 4) mit Halbleiterbauelementen, ein Kühler (5, 6) zur Kühlung der Halbleiterbauelemente und eine Kondensatorbaugruppe (7, 8) direkt am Antriebsmotor (1, 2, 31) montiert sind, während eine Drosselbaugruppe (11) hiermit zwar elektrisch verbunden, jedoch räumlich von der Antriebseinheit getrennt installiert ist, wobei der Kühler (5, 6) gleichzeitig auch zur Kühlung des Antriebsmotors herangezogen wird.

2. Antriebssystem nach Anspruch 1, dadurch gekennzeichnet, daß zur Wärmeabfuhr der im Antriebsmotor (1, 2, 31) produzierten Wärmeenergie eine Druckkontaktierung zwischen dem Antriebsmotor und dem Kühler (5, 6) vorgesehen ist.

3. Antriebssystem nach Anspruch 1, dadurch gekennzeichnet, daß zur Wärmeabfuhr der im Antriebsmotor (1, 2, 31) produzierten Wärmeenergie das Kühlsystem des Antriebsmotors direkt mit dem Kühler (5, 6) verbunden ist, indem über Kühlmittel-Verbinder das im Kühler zirkulierende Kühlmittel in das Kühlsystem des Antriebsmotors eingeleitet wird.

4. Antriebssystem nach einem der vorstehenden Ansprüche, dadurch gekennzeichnet, daß Treiberschaltungen (9, 10) für die Leistungsversorgung der Halbleiterventile in die Kondensatorbaugruppe (7, 8) oder Ventilbaugruppe (3, 4) integriert sind.

5. Antriebssystem nach einem der vorstehenden Ansprüche, dadurch gekennzeichnet, daß in die Drosselbaugruppe (11) ein Eingangskreis (15) mit elektrischem Anschluß, Sicherung und Schaltelement integriert ist.

6. Antriebssystem nach einem der vorstehenden Ansprüche, dadurch gekennzeichnet, daß die Drosselbaugruppe (11) einen eigenen Kühler (14) aufweist, dessen Kühlmittelkreislauf in den Kühlmittelkreislauf des zur Kühlung der Halbleiterventile dienenden Kühlers (5, 6) integriert ist.

7. Antriebssystem nach einem der vorstehenden Ansprüche, dadurch gekennzeichnet, daß bei Einsatz mehrerer Antriebsmotore (1, 2, 31) ein übergeordnetes zentrales Antriebssteuer- und Regelgerät (17) vorgesehen ist, welches über elektrische Verbindungen (19) an die einzelnen Stromrichtergeräte der Antriebsmotoren angeschlossen ist.
